# EUROPÄISCHE PATENTSCHRIFT

(11) **EP 4 656 303 B1**
(45) Veröffentlichungstag und Bekanntmachung des Hinweises auf die Patenterteilung: **13.05.2026**
(21) Anmeldenummer: 24178183.0
(22) Anmeldetag: 27.05.2024
(51) Int. Cl.: B21C 23/00, B21C 23/18, B21C 31/00

(54) **VERFAHREN UND MASCHINELLE ANORDNUNG ZUR ERZEUGUNG EINES PROFILS AN EINEM PLASTISCH VERFORMBAREN WERKSTÜCK DURCH AXIALFORMEN**
METHOD AND MACHINE ARRANGEMENT FOR PRODUCING A PROFILE ON A PLASTICALLY DEFORMABLE WORKPIECE BY AXIAL FORMING
PROCÉDÉ ET DISPOSITIF POUR LA RÉALISATION D'UN PROFIL SUR UNE PIÈCE À DÉFORMATION PLASTIQUE PAR FORMAGE AXIAL

(43) Veröffentlichungstag der Anmeldung: 03.12.2025
(73) Patentinhaber: FELSS Systems GmbH, 75203 Königsbach-Stein (DE)
(72) Erfinder: Keuerleber, Alexander, 75245 Neulingen (DE); Combe, Aaron, 75248 Ölbronn (DE); Wachter, Jörg, 75210 Keltern (DE); Jandt, Max Olaf, 75210 Keltern (DE); Heinrichs, Serjosha, 75038 Oberderdingen (DE)
(74) Vertreter: Kohler Schmid Möbus Patentanwälte

(56) Entgegenhaltungen:
- EP-A1- 3 181 249
- WO-A1-2006/024505
- WO-A1-2008/017358
- WO-A1-2019/137702
- DE-B4- 10 027 703

## Beschreibung

Die Erfindung betrifft ein Verfahren zur Erzeugung eines werkstückseitigen Profils an einem plastisch verformbaren, vorzugsweise zylindrischen, Werkstück durch Axialformen,
- wobei ein Umformprozess durchgeführt wird, im Laufe dessen eine Relativbewegung eines an einem Umformwerkzeug vorgesehenen formgebenden Werkzeugprofils und des umzuformenden Werkstücks ausgeführt wird zur Erzeugung des werkstückseitigen Profils mit einer werkstückseitigen Profillänge,
- wobei in dem laufenden Umformprozess
   - bei der Relativbewegung des formgebenden Werkzeugprofils und des umzuformenden Werkstücks eine oszillierende Relativbewegung des formgebenden Werkzeugprofils und des umzuformenden Werkstücks ausgeführt wird, bei welcher abwechselnd ein Umformhub und ein dem Umformhub entgegen gerichteter Rückhub ausgeführt werden,
   - das formgebende Werkzeugprofil bei dem Umformhub der oszillierenden Relativbewegung an dem Werkstück das werkstückseitige Profil mit einer Teillänge der werkstückseitigen Profillänge erzeugt und
   - sich das formgebende Werkzeugprofil bei dem Rückhub der oszillierenden Relativbewegung längs zumindest eines Teils der bei dem vorausgegangenen Umformhub erzeugten Teillänge der werkstückseitigen Profillänge bewegt und
   - eine Variation bezüglich der oszillierenden Relativbewegung des formgebenden Werkzeugprofils und des umzuformenden Werkstücks vorgenommen wird.

Die Erfindung betrifft außerdem eine maschinelle Anordnung zur Erzeugung eines werkstückseitigen Profils an einem plastisch verformbaren, vorzugsweise zylindrischen, Werkstück durch Axialformen, mit einer Umformmaschine die einen Umformantrieb aufweist, der dazu ausgebildet ist, in einem Umformprozess eine Relativbewegung eines an einem Umformwerkzeug der Umformmaschine vorgesehenen formgebenden Werkzeugprofils und eines umzuformenden, vorzugsweise zylindrischen, Werkstücks auszuführen zur Erzeugung eines werkstückseitigen Profils mit einer werkstückseitigen Profillänge,
- wobei für den Umformantrieb eine programmierbare numerische Antriebssteuerung vorgesehen ist, die ausgebildet ist zur Steuerung des Umformantriebs, indem in der Antriebssteuerung Steuerungsparameter hinterlegbar sind, aufgrund derer in dem laufenden Umformprozess bei der Relativbewegung des formgebenden Werkzeugprofils und des umzuformenden Werkstücks eine oszillierende Relativbewegung des formgebenden Werkzeugprofils und des umzuformenden Werkstücks ausgeführt wird, bei welcher abwechselnd ein Umformhub und ein dem Umformhub entgegen gerichteter Rückhub ausgeführt werden,
- wobei das formgebende Werkzeugprofil bei dem Umformhub der oszillierenden Relativbewegung an dem Werkstück das werkstückseitige Profil mit einer Teillänge der werkstückseitigen Profillänge erzeugt und
- wobei sich das formgebende Werkzeugprofil bei dem Rückhub der oszillierenden Relativbewegung längs zumindest eines Teils der bei dem vorausgegangenen Umformhub erzeugten Teillänge der werkstückseitigen Profillänge bewegt und
- wobei die Antriebssteuerung zur Hinterlegung von Steuerungsparametern für den Umformprozess ausgebildet ist, aufgrund derer in dem laufenden Umformprozess eine Variation bezüglich der oszillierenden Relativbewegung des formgebenden Werkzeugprofils und des umzuformenden Werkstücks vorgenommen wird.

Das Axialformen ist ein Verfahren des Fließpressens. Beim Fließpressen übt ein Umformwerkzeug auf ein umzuformendes Werkstück eine Druckkraft aus, die derart bemessen ist, dass die Fließgrenze des Werkstoffs des Werkstücks überschritten wird. Zu diesem Zweck werden das Umformwerkzeug und das umzuformende Werkstück mit einer Vorschubkraft gegeneinander beaufschlagt.

Gattungsgemäßer Stand der Technik ist offenbart in WO 2008017358 A1.

Im Falle des Standes der Technik werden ein umzuformendes Werkstück und eine auf dem Werkstück aufsitzende Umformmatrize mittels einer Vorschubeinrichtung längs einer Vorschubachse gegeneinander bewegt. Aufgrund der damit verbundenen Beaufschlagung des Werkstücks durch die Umformmatrize beginnt der Werkstoff des Werkstücks zu fließen und im Laufe einer axialen, das heißt längs der Vorschubachse ausgeführten Relativbewegung der Umformmatrize und des Werkstücks wird das Werkstück durch die Umformmatrize umgeformt. Die Relativbewegung der Umformmatrize und des Werkstücks wird als ungleichförmige Bewegung ausgeführt. Eine Frequenzerzeugungseinrichtung bewirkt, dass die Vorschubeinrichtung eine oszillierende Relativbewegung der Umformmatrize und des umzuformenden Werkstücks erzeugt, im Rahmen derer sie sich abwechselnd gegeneinander und voneinander weg bewegen, so lange bis das Werkstück über eine vorgegebene Umformlänge umgeformt ist. Dabei wird die Vorschubeinrichtung mittels der Frequenzerzeugungseinrichtung derart moduliert, das die Hubwege der Vorwärtshübe und/oder der Rückwärtshübe mindestens zweier aufeinanderfolgender, jeweils aus einem Vorwärtshub und einem Rückwärtshub bestehender Umformschritte unterschiedlich sind.

Weiterer Stand der Technik ist bekannt aus WO 2019137702 A1. Diese Druckschrift offenbart ein Verfahren und eine Vorrichtung zum Herstellen von hohlen, innengekühlten Ventilen. Dabei wird der Querschnitt eines Schaftabschnitts eines Ventilvorformlings verjüngt, indem der Schaftabschnitt des Ventilvorformlings mittels einer Pressvorrichtung mit einer oszillierenden Bewegung in eine Matrize eingepresst wird. Die Hublänge der dabei ausgeführten Arbeitshübe wird variiert.

Ausgehend von dem gattungsgemäßen Stand der Technik besteht die Aufgabe der vorliegenden Erfindung darin, ein Verfahren und eine maschinelle Anordnung bereitzustellen, mittels derer Bearbeitungsergebnisse mit einer gegenüber dem Stand der Technik verbesserten Qualität erzielt werden können.

Erfindungsgemäß gelöst wird diese Aufgabe durch das Verfahren gemäß Patentanspruch 1 und durch die maschinelle Anordnung gemäß Patentanspruch 15.

Gemäß den Patentansprüchen 1 und 15 wird der laufende Umformprozess bezüglich der zur Werkstückumformung ausgeführten oszillierenden Relativbewegung des formgebenden Werkzeugprofils und des umzuformenden Werkstücks variiert. Ein Umformantrieb der anspruchsgemäßen maschinellen Anordnung, mittels dessen das Umformwerkzeug, beziehungsweise das formgebende Werkzeugprofil, und das Werkstück während des laufenden Umformprozesses relativ zueinander bewegt werden, ist mit einer Antriebssteuerung versehen, welche die Relativbewegung von Umformwerkzeug und Werkstück im laufenden Umformprozess entsprechend steuert. In welcher Weise der laufende Umformprozess bezüglich der oszillierenden Relativbewegung des formgebenden Werkzeugprofils und des umzuformenden Werkstücks im Einzelfall variiert wird, wird im Falle der Erfindung im Vorfeld eines Umformprozesses insbesondere empirisch festgelegt.

Das zu bearbeitende Werkstück besitzt vorzugsweise zylindrische Gestalt und kann sowohl als Hohlkörper als auch massiv ausgebildet sein. Besonders relevant ist die vorliegende Erfindung für den Bereich Automotive und dort beispielsweise für die Herstellung von Wellen für den Antriebsstrang von Fahrzeugen.

Der laufende Umformprozess wird mittels einer programmierbaren numerischen Steuerung gesteuert. In der numerischen Steuerung werden Steuerungsparameter hinterlegt, aufgrund derer der laufende Umformprozess abgestimmt auf den jeweiligen Anwendungsfall bezüglich der oszillierenden Relativbewegung des formgebenden Werkzeugprofils und des umzuformenden Werkstücks variiert wird.

Erfindungsgemäß ist die programmierbare numerische Steuerung für den Fall einer Abweichung einer Ist-Geometrie eines in einem dem Umformprozess zeitlich vorhergehenden Umformprozess erzeugten werkstückseitigen Profils von einer Soll-Geometrie des werkstückseitigen Profils ausgebildet zur Hinterlegung von Steuerungsparametern, aufgrund derer in dem laufenden Umformprozess bezüglich der oszillierenden Relativbewegung des formgebenden Werkzeugprofils und des umzuformenden Werkstücks eine Variation vorgenommen wird, aufgrund derer die Ist-Geometrie des in dem Umformprozess erzeugten werkstückseitigen Profils mit der Soll-Geometrie des werkstückseitigen Profils übereinstimmt oder sich der Soll-Geometrie des werkstückseitigen Profils zumindest annähert.

Entsprechend ist die Antriebssteuerung der erfindungsgemäßen maschinellen Anordnung zur Hinterlegung von Steuerungsparametern für den Umformprozess ausgebildet, aufgrund derer in dem laufenden weiteren Umformprozess bezüglich der oszillierenden Relativbewegung des formgebenden Werkzeugprofils und des umzuformenden Werkstücks eine Variation vorgenommen wird, aufgrund derer die Ist-Geometrie des in dem Umformprozess erzeugten werkstückseitigen Profils mit der Soll-Geometrie des werkstückseitigen Profils übereinstimmt oder sich der Soll-Geometrie des werkstückseitigen Profils zumindest annähert (Patentanspruch 15).

Für den vorhergehenden Umformprozess und für den weiteren Umformprozess werden dasselbe Umformwerkzeug oder gleichartige Umformwerkzeuge verwendet.

Sowohl der vorhergehende Umformprozess als auch der weitere Umformprozess sind bezüglich der oszillierenden Relativbewegung des formgebenden Werkzeugprofils und des umzuformenden Werkstücks numerisch gesteuert. Die Steuerungsparameter für den weiteren Umformprozess werden derart definiert, dass sich bezüglich der oszillierenden Relativbewegung des formgebenden Werkzeugprofils und des umzuformenden Werkstücks eine Variation des weiteren Umformprozesses ergibt, aufgrund derer die nach dem vorhergehenden Umformprozess bestehende Abweichung der Ist-Geometrie von der Soll-Geometrie des werkstückseitigen Profils zumindest weitgehend beseitigt wird.

Die nach dem vorhergehenden Umformprozess vorliegende Abweichung der Ist-Geometrie von der Soll-Geometrie des werkstückseitigen Profils wird ermittelt und dient dann als Grundlage für die beispielsweise empirische Festlegung der Parameter zur Variation des laufenden weiteren Umformprozesses bezüglich der oszillierenden Relativbewegung des formgebenden Werkzeugprofils und des umzuformenden Werkstücks.

Im Idealfall bewirkt die bezüglich der oszillierenden Relativbewegung des formgebenden Werkzeugprofils und des umzuformenden Werkstücks vorgenommene Variation des laufenden weiteren Umformprozesses, dass die Ist-Geometrie des in dem weiteren Umformprozess erzeugten werkstückseitigen Profils mit der Soll-Geometrie des werkstückseitigen Profils übereinstimmt.

Besondere Ausführungsarten des erfindungsgemäßen Verfahrens nach Patentanspruch 1 ergeben sich aus den abhängigen Patentansprüchen 2 bis 14.

Auch zur empirischen Festlegung der Anpassungen, die in dem laufenden weiteren Umformprozess bezüglich der oszillierenden Relativbewegung des Umformwerkzeugs und des umzuformenden Werkstücks vorzunehmen sind, wird in bevorzugter Ausgestaltung der Erfindung im Anschluss an den vorhergehenden Umformprozess das in dem vorhergehenden Umformprozess erzeugte werkstückseitige Profil vermessen und danach die auf diese Weise bestimmte Ist-Geometrie des in dem vorhergehenden Umformprozess erzeugten werkstückseitigen Profils mit der angestrebten Soll-Geometrie verglichen (Patentanspruch 2).

Gemäß Patentanspruch 3 ist im Falle der Erfindung vorgesehen, dass der laufende vorhergehende Umformprozess bezüglich der oszillierenden Relativbewegung des formgebenden Werkzeugprofils und des umzuformenden Werkstücks einheitlich ist.

Alternativ wird in weiterer Ausgestaltung der Erfindung auch der laufende vorhergehende Umformprozess bezüglich der oszillierenden Relativbewegung des formgebenden Werkzeugprofils und des umzuformenden Werkstücks variiert. Dabei weicht die in dem laufenden weiteren Umformprozess bezüglich der oszillierenden Relativbewegung des formgebenden Werkzeugprofils und des umzuformenden Werkstücks vorgenommene Variation von der in dem laufenden vorhergehenden Umformprozess vorgenommenen Variation ab (Patentanspruch 4). Erfindungsgemäß könnte in dem weiteren Umformprozess das Werkstück nachbearbeitet werden, das bereits in dem vorhergehenden Umformprozess bearbeitet worden ist. Alternativ wird im Falle einer bevorzugten Variante des erfindungsgemäßen Verfahrens der vorhergehende Umformprozess als probeweiser Umformprozess an einem Probewerkstück durchgeführt, während der weitere Umformprozess als Fertigungsprozess durchgeführt wird, in welchem das werkstückseitige Profil an einem mit dem Probewerkstück des Umformprozesses gleichartigen, vorzugsweise aus derselben Charge wie das Probewerkstück stammenden Werkstück erzeugt wird (Patentanspruch 5).

Im Falle einer weiteren bevorzugten Variante der Erfindung sind das erfindungsgemäße Verfahren und die erfindungsgemäße maschinelle Anordnung zur Erzeugung einer werkstückseitigen Verzahnung ausgebildet, wobei es sich bei der werkstückseitigen Verzahnung beispielsweise um eine Geradverzahnung oder um eine Schrägverzahnung, beispielsweise um eine Verzahnung mit Helixverlauf, handeln kann (Patentanspruch 6).

Mittels entsprechender Bauarten der erfindungsgemäßen maschinellen Anordnung lassen sich Außenverzahnungen oder Innenverzahnungen erzeugen. Zur Fertigung von Außenverzahnungen dient erfindungsgemäß als Umformwerkzeug beispielsweise eine Umformmatrize, die auf dem umzuformenden Werkstück aufsitzt. Das Werkstück kann dabei massiv oder als Hohlkörper ausgebildet sein. Die Erzeugung von Innenverzahnungen kann erfindungsgemäß mittels eines Umformstempels erfolgen, der in die Wand eines werkstückseitigen Hohlraums eingreift.

Bei der Erzeugung einer werkstückseitigen Verzahnung wird die Ist-Geometrie des in einem vorhergehenden Umformprozess tatsächlich erzeugten werkstückseitigen Profils oder die simulierte Ist-Geometrie eines simulierten werkstückseitigen Profils mit der Soll-Geometrie des werkstückseitigen Profils verglichen, indem vorzugsweise die Ist-Winkellage und die Soll-Winkellage einer Zahnflankenlinie und/oder die Ist-Form und die Soll-Form einer Zahnflankenlinie miteinander verglichen werden. Aus einer Flankenlinien-Winkelabweichung und/oder aus einer Flankenlinien-Formabweichung kann dann gegebenenfalls eine Flankenlinien-Gesamtabweichung ermittelt werden. Anhand der Flankenlinien-Gesamtabweichung kann dann festgelegt werden, in welcher Weise der weitere Umformprozess oder der sich an die Simulation anschließende Umformprozess bezüglich der oszillierenden Relativbewegung des formgebenden Verzahnungsprofils und des umzuformenden Werkstücks zu variieren ist, damit sich an dem Werkstück als Bearbeitungsergebnis eine Verzahnung mit der gewünschten Verzahnungsgeometrie ergibt.

In vorteilhafter Ausgestaltung des erfindungsgemäßen Verfahrens wird gemäß Patentanspruch 7 die in dem laufenden Umformprozess und gegebenenfalls die in dem laufenden vorhergehenden Umformprozess vorgenommene Variation bezüglich der oszillierenden Relativbewegung des formgebenden Werkzeugprofils und des umzuformenden Werkstücks in Abhängigkeit von einer prozessrelevanten Eigenschaft des umzuformenden Werkstücks und somit werkstückabhängig vorgenommen.

Ein Faktor, der sich erfahrungsgemäß signifikant auf das Bearbeitungsergebnis eines Umformprozesses der erfindungsgemäßen Art auswirkt und der folglich eine besonders prozessrelevante Eigenschaft des umzuformenden Werkstücks darstellt, ist die Steifigkeit des umzuformenden Werkstücks. In bevorzugter Ausgestaltung der Erfindung wird daher der laufende Umformprozess und gegebenenfalls der laufende vorhergehende Umformprozess, in Abhängigkeit von der Steifigkeit des umzuformenden Werkstücks bezüglich der oszillierenden Relativbewegung des formgebenden Werkzeugprofils und des umzuformenden Werkstücks variiert (Patentanspruch 8). Die Steifigkeit eines umzuformenden Werkstücks ist beispielsweise durch den Werkstoff und/oder durch die Geometrie des Werkstücks bedingt. Etwa im Falle von als Hohlkörper ausgebildeten Werkstücken hängt die Werkstücksteifigkeit wesentlich von der Wandstärke des Werkstücks und/oder davon ab, ob das Werkstück ein Sackloch oder einen durchgängigen Hohlraum aufweist.

Der Werkstoff des umzuformenden Werkstücks kann auch unabhängig von einem Einfluss auf die Werkstücksteifigkeit prozessrelevant sein und im Falle der Erfindung eine anwendungsbezogene Variation des laufenden Umformprozesses und gegebenenfalls des laufenden vorhergehenden Umformprozesses bezüglich der oszillierenden Relativbewegung induzieren (Patentanspruch 9). So wirkt sich der Werkstoff des umzuformenden Werkstücks etwa auf die Reibungsverhältnisse bei der zur Erzeugung des werkstückseitigen Profils ausgeführten Relativbewegung des formgebenden Werkzeugprofils und des umzuformenden Werkstücks aus.

Die Eigenschaften eines umzuformenden Werkstückes können in verschiedenen Bereichen unterschiedlich sind. Dies kann zum Beispiel mit Eigenspannungen oder mit Gefügeunterschieden zusammenhängen, die auf die Herstellungsweise des Werkstückrohlings zurückzuführen sind. Auch aus derartigen Gegebenheiten resultierende Abweichungen der Ist-Geometrie eines werkstückseitigen Profils von dessen Soll-Geometrie können im Falle der Erfindung dadurch vermieden werden, dass in einem laufenden Umformprozess und gegebenenfalls in einem laufenden vorhergehenden Umformprozess eine insbesondere empirisch festgelegte Variation der oszillierenden Relativbewegung des formgebenden Werkzeugprofils und des umzuformenden Werkstücks vorgenommen wird.

Ergänzend oder alternativ zu einer werkstückabhängigen Variation kann erfindungsgemäß in einem laufenden Umformprozess und gegebenenfalls in einem laufenden vorhergehenden Umformprozess bezüglich der oszillierenden Relativbewegung des formgebenden Werkzeugprofils und des umzuformenden Werkstücks eine von umformtechnischen Parametern abhängige Variation vorgenommen werden (Patentanspruch 10). Ein derartiger umformtechnischer Parameter ist beispielsweise das in dem laufenden Umformprozess und gegebenenfalls das in dem laufenden vorhergehenden Umformprozess auf das umzuformende Werkstück aufgegebene Schmiermittel.

Erfindungsgemäß bevorzugte Maßnahmen zur Variierung des laufenden Umformprozesses und gegebenenfalls des laufenden vorhergehenden Umformprozesses bezüglich der oszillierenden Relativbewegung des formgebenden Werkzeugprofils und des umzuformenden Werkstücks ergeben sich aus den Patentansprüchen 11 und 12.

Gemäß Patentanspruch 11 ändert sich in Weiterbildung der Erfindung im laufenden Umformprozess und gegebenfalls in dem laufenden vorhergehenden Umformprozess der Betrag des Umformhubs und/oder der Betrag des Rückhubs und/oder die Frequenz der oszillierenden Relativbewegung des formgebenden Werkzeugprofils und des umzuformenden Werkstücks.

Patentanspruch 12 betrifft eine Variante des erfindungsgemäßen Verfahrens, im Falle derer der laufende Umformprozess und gegebenenfalls der laufende vorhergehende Umformprozess, bezüglich der oszillierenden Relativbewegung des formgebenden Werkzeugprofils und des umzuformenden Werkstücks variiert wird, indem abgestimmt auf den jeweiligen Anwendungsfall eine oszillierende Relativbewegung mit einer unidirektionalen Relativbewegung des formgebenden Werkzeugprofils und des umzuformenden Werkstücks kombiniert wird.

In dem letztgenannten Fall werden erfindungsgemäß die Anteile der oszillierenden Relativbewegung und der unidirektionalen Relativbewegung an der Relativ-Gesamtbewegung des formgebenden Werkzeugprofils und des umzuformenden Werkstücks und/oder die zeitliche Reihenfolge der oszillierenden Relativbewegung und der unidirektionalen Relativbewegung variabel definiert (Patentanspruch 13).

Ausweislich Patentanspruch 14 ist in weiterer Ausgestaltung des erfindungsgemäßen Verfahrens vorgesehen, dass die oszillierende Relativbewegung des Umformwerkzeugs und des umzuformenden Werkstücks mehrere oszillierende Teil-Relativbewegungen umfasst, die durch eine unidirektionale Relativbewegung des formgebenden Werkzeugprofils und des umzuformenden Werkstücks voneinander getrennt sind. Zur anwendungsbezogenen Variierung des laufenden Umformprozesses und gegebenenfalls des laufenden vorhergehenden Umformprozesses bezüglich der oszillierenden Relativbewegung kann bezüglich jeder der oszillierenden Teil-Relativbewegungen in der vorstehenden Weise verfahren werden.

Nachfolgend wird die Erfindung anhand beispielhafter schematischer Darstellungen näher erläutert. Es zeigen:
- Figur 1: eine maschinelle Anordnung zur Erzeugung eines werkstückseitigen Profils an einem plastisch verformbaren zylindrischen Werkstück durch Axialformen,
- Figur 2: eine erste Möglichkeit zur Gestaltung eines Umformprozesses an der maschinellen Anordnung gemäß Figur 1 und
- Figur 3: eine zweite Möglichkeit zur Gestaltung eines Umformprozesses an der maschinellen Anordnung gemäß Figur 1.

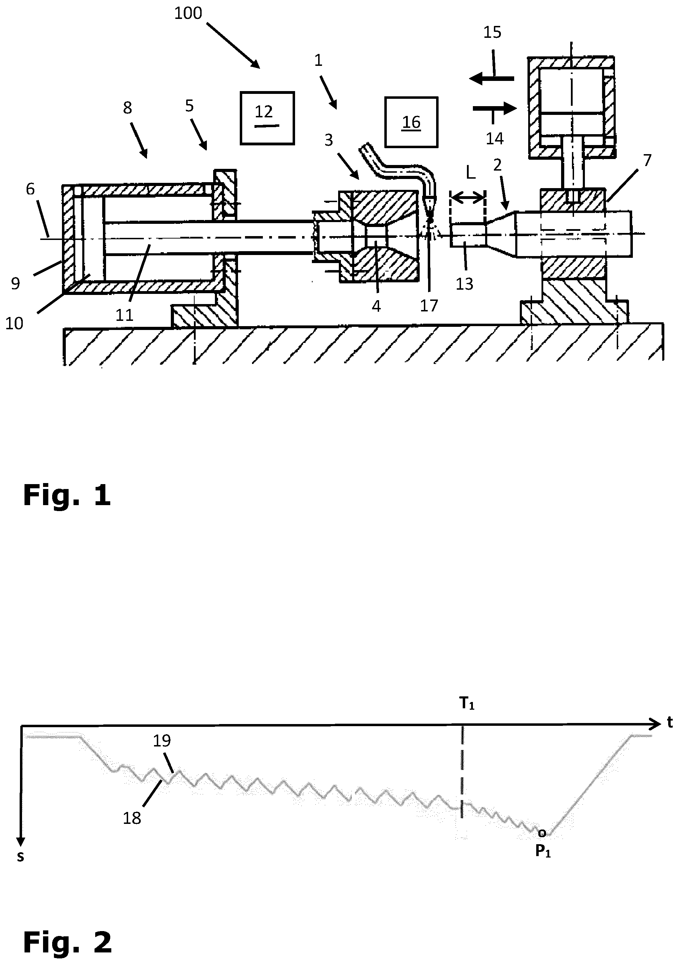

Eine in Figur 1 gezeigte maschinelle Anordnung 100 ist ausgebildet zur Erzeugung eines Profils in Form eines als Außenverzahnung ausgebildeten Verzahnungsprofils an einem plastisch verformbaren zylindrischen Werkstück, hier: an einem aus Stahl gefertigten Wellenrohling 2 einer Antriebswelle für Kraftfahrzeuge. Als Umformwerkzeug umfasst eine Umformmaschine 1 der maschinellen Anordnung 100 eine herkömmliche Umformmatrize 3, die im Bereich einer Kalibrierstrecke 4 als formgebendes Werkzeugprofil ein in Figur 1 nicht im Einzelnen gezeigtes formgebendes Verzahnungsprofil aufweist.

Mittels eines Umformantriebs 5 kann die Umformmatrize 3 längs einer Bewegungsachse 6 relativ zu dem Wellenrohling 2 bewegt werden, der seinerseits mittels einer Spanneinheit 7 geklemmt und folglich längs der Bewegungsachse 6 ortsunveränderlich ist.

Der Umformantrieb 5 umfasst eine hydraulische Kolben-Zylinder-Einheit 8 mit einem stationären Zylinder 9 und einem im Inneren des Zylinders 9 längs der Bewegungsachse 6 beweglich geführten Kolben 10. An einer Kolbenstange 11 ist die Kolben-Zylinder-Einheit 8 mit der Umformmatrize 3 verbunden. Eine in Figur 1 stark schematisch angedeutete programmierbare numerische Steuerung in Form einer numerischen Antriebssteuerung 12 ist zur Steuerung des Umformantriebs 5 vorgesehen.

In dem dargestellten Beispielsfall ist ein durchmesserreduziertes Wellenende 13 des Wellenrohlings 2 durch Axialformen mit einem werkstückseitigen Verzahnungsprofil mit einer werkstückseitigen Profillänge L zu versehen.

Zu diesem Zweck wird ausgehend von den Verhältnissen gemäß Figur 1 die Umformmatrize 3 zunächst mittels der Kolben-Zylinder-Einheit 8 längs der Bewegungsachse 6 unidirektional vorgeschoben, bis das in Bewegungsrichtung voreilende Ende der Kalibrierstrecke 4 und somit das in der Bewegungsrichtung voreilende Ende des an der Umformmatrize 3 vorgesehenen formgebenden Verzahnungsprofils auf das Wellenende 13 des Wellenrohlings 2 aufläuft. Nun beginnt der Umformprozess, im Laufe dessen die Umformmatrize 3 weiter in Figur 1 nach rechts relativ zu dem Wellenrohling 2 vorgeschoben wird, nun aber indem durch entsprechende Steuerung der Kolben-Zylinder-Einheit 8 mittels der Antriebssteuerung 12 eine in Figur 1 nach rechts fortschreitende oszillierende Bewegung der Umformmatrize 3 relativ zu dem Wellenrohling 2 ausgeführt wird. Bei der oszillierenden Relativbewegung der Umformmatrize 3 und des formgebenden Verzahnungsprofils einerseits und des Wellenrohlings 2 andererseits werden von dem formgebenden Verzahnungsprofil abwechselnd Umformhübe in Richtung eines Pfeils 14 und den Umformhüben entgegen gerichtete Rückhübe in Richtung eines Pfeils 15 ausgeführt. Bei den Umformhüben greift das formgebende Verzahnungsprofil der Umformmatrize 3 in das umzuformende Wellenende 13 ein und erzeugt durch Umformung des Wellenendes 13 an diesem das werkstückseitige Verzahnungsprofil mit einer Teillänge der werkstückseitigen Verzahnungslänge L. Bei den Rückhüben der oszillierenden Relativbewegung des formgebenden Verzahnungsprofils der Umformmatrize 3 und des Wellenrohlings 2 bewegt sich das formgebende Verzahnungsprofil jeweils längs eines Teils der bei dem vorausgegangenen Umformhub erzeugten Teillänge der werkstückseitigen Verzahnungslänge L in Gegenrichtung des Umformhubs. Mittels einer in Figur 1 angedeuteten Schmiermittelzufuhr 17 wird während der oszillierenden Relativbewegung des formgebenden Verzahnungsprofils der Umformmatrize 3 und des Wellenrohlings 2 auf den Wellenrohling 2 Schmiermittel aufgegeben.

Mittels der numerischen Antriebssteuerung 12 wird der laufende Umformprozess bezüglich der oszillierenden Relativbewegung des formgebenden Verzahnungsprofils und des Wellenrohlings 2 abgestimmt auf die Steifigkeit des Wellenrohlings 2 im Bereich des umzuformenden Wellenendes 13 variiert.

In welcher Weise der laufende Umformprozess bezüglich der oszillierenden Relativbewegung des formgebenden Verzahnungsprofils und des zu bearbeitenden Werkstücks variiert wird, ist durch entsprechende Programmierung der Antriebssteuerung 12 im Vorfeld des Umformprozesses festgelegt worden. Die dabei programmierten Prozessparameter wurden zuvor mittels eines probeweise durchgeführten vorhergehenden Umformprozesses empirisch bestimmt.

Zu diesem Zweck wurde nach einem probeweise durchgeführten Umformprozess mittels einer Mess- und Auswertevorrichtung 16 der maschinellen Anordnung 100 das probeweise erzeugte werkstückseitige Profil vermessen und danach die Geometrie des probeweise erzeugten werkstückseitigen Profils mit der angestrebten Soll-Geometrie verglichen. Die von der Steifigkeit des Wellenrohlings im Bereich des Wellenendes 13 abhängigen Messergebnisse dienten dann als Grundlage für die Programmierung der Antriebssteuerung 12 für den als weiterer Umformprozess durchgeführten nachfolgenden Umformprozess.

Eine Vorgehensweise, die durch entsprechende Programmierung der Antriebssteuerung 12 der in Figur 1 dargestellten maschinellen Anordnung 100 realisierbar ist, ist in Figur 2 veranschaulicht.

Der in Figur 2 gezeigte Graph zeigt den Weg s des formgebenden Verzahnungsprofils über der Zeit t. Nach unten gerichtete Flanken 18 des sägezahnartigen Graphen bilden die Umformhübe des formgebenden Verzahnungsprofils ab, nach oben gerichtete Flanken 19 des sägezahnartigen Graphen veranschaulichen die Rückhübe des formgebenden Verzahnungsprofils relativ zu dem Wellenrohling 2. In einem Punkt P₁ ist die werkstückseitige Verzahnungslänge L erreicht.

Gemäß Figur 2 ändert sich in dem dargestellten Beispielfall aufgrund einer entsprechenden Steuerung des Umformantriebs 5 zu einem Zeitpunkt T₁ die oszillierende Relativbewegung des formgebenden Verzahnungsprofils und des umzuformenden Wellenrohlings 2 dahingehend, dass der Betrag der Umformhübe und der Betrag der sich an die Umformhübe anschließenden Rückhübe verkleinert und die Frequenz der oszillierenden Relativbewegung des formgebenden Verzahnungsprofils und des umzuformenden Wellenrohlings 2 erhöht wird.

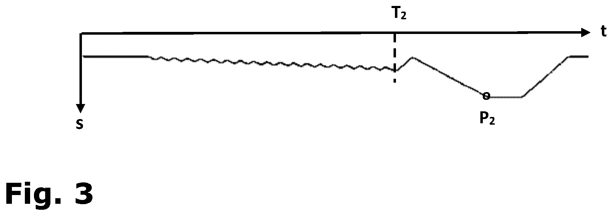

Figur 3 zeigt eine gegenüber den Verhältnissen gemäß Figur 2 abgewandelte Variation der oszillierenden Relativbewegung des formgebenden Verzahnungsprofils der Umformmatrize 3 und eines umzuformenden Werkstücks in einem laufenden Umformprozess. In dem Anwendungsfall gemäß Figur 3 wird nur eine Teillänge der werkstückseitigen Profillänge L mit einer oszillierenden Relativbewegung des formgebenden Verzahnungsprofils und des umzuformenden Werkstücks erzeugt. Zu einem Zeitpunkt T₂ wird aufgrund einer entsprechenden Steuerung des Umformantriebs 5 mittels der Antriebssteuerung 12 die bis dahin ausgeführte oszillierende Relativbewegung des formgebenden Verzahnungsprofils und des umzuformenden Werkstücks beendet und dann eine unidirektionale Umformbewegung des formgebenden Verzahnungsprofils relativ zu dem umzuformenden Werkstück ausgeführt, bis in dem Punkt P₂ die werkstückseitige Verzahnungslänge L erreicht ist.

## Patentansprüche

1. Verfahren zur Erzeugung eines werkstückseitigen Profils an einem plastisch verformbaren, vorzugsweise zylindrischen, Werkstück (2) durch Axialformen,
• wobei ein Umformprozess durchgeführt wird, im Laufe dessen eine Relativbewegung eines an einem Umformwerkzeug (3) vorgesehenen formgebenden Werkzeugprofils und des umzuformenden Werkstücks (2) ausgeführt wird zur Erzeugung des werkstückseitigen Profils mit einer werkstückseitigen Profillänge (L),
• wobei in dem laufenden Umformprozess
- bei der Relativbewegung des formgebenden Werkzeugprofils und des umzuformenden Werkstücks (2) eine oszillierende Relativbewegung des formgebenden Werkzeugprofils und des umzuformenden Werkstücks (2) ausgeführt wird, bei welcher abwechselnd ein Umformhub und ein dem Umformhub entgegen gerichteter Rückhub ausgeführt werden,
- das formgebende Werkzeugprofil bei dem Umformhub der oszillierenden Relativbewegung an dem Werkstück (2) das werkstückseitige Profil mit einer Teillänge der werkstückseitigen Profillänge (L) erzeugt und
- sich das formgebende Werkzeugprofil bei dem Rückhub der oszillierenden Relativbewegung längs zumindest eines Teils der bei dem vorausgegangenen Umformhub erzeugten Teillänge der werkstückseitigen Profillänge (L) bewegt und
- eine Variation bezüglich der oszillierenden Relativbewegung des formgebenden Werkzeugprofils und des umzuformenden Werkstücks (2) vorgenommen wird,
**dadurch gekennzeichnet, dass** der Umformprozess mittels einer programmierbaren numerischen Steuerung (12) gesteuert wird, die für den Fall einer Abweichung einer Ist-Geometrie eines in einem dem Umformprozess zeitlich vorhergehenden Umformprozess erzeugten werkstückseitigen Profils von einer Soll-Geometrie des werkstückseitigen Profils ausgebildet ist zur Hinterlegung von Steuerungsparametern, aufgrund derer in dem laufenden Umformprozess bezüglich der oszillierenden Relativbewegung des formgebenden Werkzeugprofils und des umzuformenden Werkstücks (2) eine Variation vorgenommen wird, aufgrund derer die Ist-Geometrie des in dem Umformprozess erzeugten werkstückseitigen Profils mit der Soll-Geometrie des werkstückseitigen Profils übereinstimmt oder sich der Soll-Geometrie des werkstückseitigen Profils zumindest annähert,
• wobei im Laufe des vorhergehenden Umformprozesses eine Relativbewegung eines an einem Umformwerkzeug (3) vorgesehenen formgebenden Werkzeugprofils und eines umzuformenden, vorzugsweise zylindrischen, Werkstücks (2) ausgeführt wird zur Erzeugung des werkstückseitigen Profils mit der werkstückseitigen Profillänge (L), wobei das Umformwerkzeug (3) des vorhergehenden Umformprozesses und das Umformwerkzeug (3) des Umformprozesses gleichartig oder identisch sind und wobei das Werkstück (2) des vorhergehenden Umformprozesses und das Werkstück (2) des Umformprozesses gleichartig oder identisch sind,
• wobei in dem laufenden vorhergehenden Umformprozess
- bei der Relativbewegung des formgebenden Werkzeugprofils und des umzuformenden Werkstücks (2) eine oszillierende Relativbewegung des formgebenden Werkzeugprofils und des umzuformenden Werkstücks (2) ausgeführt wird, bei welcher abwechselnd ein Umformhub und ein dem Umformhub entgegen gerichteter Rückhub ausgeführt werden,
- das formgebende Werkzeugprofil bei dem Umformhub der oszillierenden Relativbewegung an dem Werkstück (2) das werkstückseitige Profil mit einer Teillänge der werkstückseitigen Profillänge (L) erzeugt und
- sich das formgebende Werkzeugprofil bei dem Rückhub der oszillierenden Relativbewegung längs zumindest eines Teils der bei dem vorausgegangenen Umformhub erzeugten Teillänge der werkstückseitigen Profillänge (L) bewegt,
• wobei der vorhergehende Umformprozess mittels einer numerischen Steuerung (12) gesteuert wird, in welcher Steuerungsparameter zur Steuerung des laufenden vorhergehenden Umformprozesses bezüglich der oszillierenden Relativbewegung des formgebenden Werkzeugprofils und des umzuformenden Werkstücks (2) hinterlegt sind,
und
• wobei nach Beendigung des vorhergehenden Umformprozesses die Ist-Geometrie des in dem vorhergehenden Umformprozess erzeugten werkstückseitigen Profils ermittelt und mit der Soll-Geometrie des werkstückseitigen Profils verglichen wird.

2. Verfahren nach Anspruch 1, **dadurch gekennzeichnet, dass** die Ist-Geometrie des in dem vorhergehenden Umformprozess erzeugten werkstückseitigen Profils und die Ist-Geometrie des in dem Umformprozess erzeugten werkstückseitigen Profils ermittelt werden, indem das in dem vorhergehenden Umformprozess erzeugte werkstückseitige Profil und das in dem Umformprozess erzeugte werkstückseitigen Profil vermessen werden.

3. Verfahren nach einem der vorhergehenden Ansprüche, **dadurch gekennzeichnet, dass** der laufende vorhergehende Umformprozess bezüglich der oszillierenden Relativbewegung des formgebenden Werkzeugprofils und des umzuformenden Werkstücks (2) einheitlich ist.

4. Verfahren nach Anspruch 1 oder Anspruch 2, **dadurch gekennzeichnet,**
• **dass** in dem laufenden vorhergehenden Umformprozess eine Variation bezüglich der oszillierenden Relativbewegung des formgebenden Werkzeugprofils und des umzuformenden Werkstücks (2) vorgenommen wird und
• **dass** die in dem laufenden Umformprozess bezüglich der oszillierenden Relativbewegung des formgebenden Werkzeugprofils und des umzuformenden Werkstücks (2) vorgenommene Variation von der in dem laufenden vorhergehenden Umformprozess vorgenommenen Variation abweicht.

5. Verfahren nach einem der vorhergehenden Ansprüche, **dadurch gekennzeichnet,**
• **dass** der vorhergehende Umformprozess als probeweiser Umformprozess durchgeführt wird, in welchem das werkstückseitige Profil an einem als umzuformendes Werkstück (2) vorgesehenen Probewerkstück erzeugt wird und
• **dass** der Umformprozess als Fertigungsprozess durchgeführt wird, in welchem das werkstückseitige Profil an einem mit dem Probewerkstück des Umformprozesses gleichartigen Werkstück (2) erzeugt wird.

6. Verfahren nach einem der vorhergehenden Ansprüche, **dadurch gekennzeichnet, dass** in dem Umformprozess und in dem vorhergehenden Umformprozess ein an dem Umformwerkzeug (3) als formgebendes Werkzeugprofil vorgesehenes formgebendes Verzahnungsprofil und das umzuformende Werkstück (2) mit der Relativbewegung bewegt werden zur Erzeugung eines als werkstückseitiges Verzahnungsprofil ausgebildeten werkstückseitigen Profils mit einer werkstückseitigen Verzahnungslänge als werkstückseitige Profillänge (L),
• wobei das formgebende Verzahnungsprofil bei dem Umformhub der oszillierenden Relativbewegung in das umzuformende Werkstück (2) eingreift und an dem Werkstück (2) das werkstückseitige Verzahnungsprofil mit einer Teillänge der werkstückseitigen Verzahnungslänge erzeugt und
• wobei sich das formgebende Verzahnungsprofil bei dem Rückhub der oszillierenden Relativbewegung längs zumindest eines Teils der bei dem vorausgegangenen Umformhub erzeugten Teillänge der werkstückseitigen Verzahnungslänge bewegt.

7. Verfahren nach einem der vorhergehenden Ansprüche, **dadurch gekennzeichnet, dass** die in dem laufenden Umformprozess und gegebenenfalls die in dem laufenden vorhergehenden Umformprozess vorgenommene Variation bezüglich der oszillierenden Relativbewegung des formgebenden Werkzeugprofils und des umzuformenden Werkstücks (2) in Abhängigkeit von einer prozessrelevanten Eigenschaft des umzuformenden Werkstücks vorgenommen wird.

8. Verfahren nach Anspruch 7, **dadurch gekennzeichnet, dass** die in dem laufenden Umformprozess und gegebenenfalls die in dem laufenden vorhergehenden Umformprozess vorgenommene Variation bezüglich der oszillierenden Relativbewegung des formgebenden Werkzeugprofils und des umzuformenden Werkstücks (2) in Abhängigkeit von der Steifigkeit des umzuformenden Werkstücks (2) vorgenommen wird.

9. Verfahren nach Anspruch 7 oder Anspruch 8, **dadurch gekennzeichnet, dass** die in dem laufenden Umformprozess und gegebenenfalls die in dem laufenden vorhergehenden Umformprozess vorgenommene Variation bezüglich der oszillierenden Relativbewegung des formgebenden Werkzeugprofils und des umzuformenden Werkstücks (2) in Abhängigkeit von dem Werkstoff des umzuformenden Werkstücks (2) vorgenommen wird.

10. Verfahren nach einem der vorhergehenden Ansprüche, **dadurch gekennzeichnet, dass** die in dem laufenden Umformprozess und gegebenenfalls die in dem laufenden vorhergehenden Umformprozess vorgenommene Variation bezüglich der oszillierenden Relativbewegung des formgebenden Werkzeugprofils und des umzuformenden Werkstücks (2) in Abhängigkeit von wenigstens einem umformtechnischen Parameter vorgenommen wird.

11. Verfahren nach einem der vorhergehenden Ansprüche, **dadurch gekennzeichnet, dass** die Variation bezüglich der oszillierenden Relativbewegung des formgebenden Werkzeugprofils und des umzuformenden Werkstücks (2) in dem laufenden Umformprozess und gegebenenfalls in dem laufenden vorhergehenden Umformprozess vorgenommen wird, indem der Betrag des Umformhubs und/oder der Betrag des Rückhubs und/oder die Frequenz der oszillierenden Relativbewegung variiert wird.

12. Verfahren nach einem der vorhergehenden Ansprüche, **dadurch gekennzeichnet, dass** die Variation bezüglich der oszillierenden Relativbewegung des formgebenden Werkzeugprofils und des umzuformenden Werkstücks (2) in dem laufenden Umformprozess und gegebenenfalls in dem laufenden vorhergehenden Umformprozess vorgenommen wird, indem die oszillierende Relativbewegung als Teil der Relativbewegung des formgebenden Werkzeugprofils und des umzuformenden Werkstücks (2) ausgeführt wird und indem zusätzlich zu der oszillierenden Relativbewegung als weiterer Teil der Relativbewegung des formgebenden Werkzeugprofils und des umzuformenden Werkstücks (2) eine unidirektionale Relativbewegung des formgebenden Werkzeugprofils und des umzuformenden Werkstücks (2) ausgeführt wird, wobei das formgebende Werkzeugprofil bei der unidirektionalen Relativbewegung an dem Werkstück (2) das werkstückseitige Profil mit einer Teillänge der werkstückseitigen Profillänge (L) erzeugt.

13. Verfahren nach Anspruch 12, **dadurch gekennzeichnet,**
• **dass** der Anteil der oszillierenden Relativbewegung und der Anteil der unidirektionalen Relativbewegung an der Relativbewegung des formgebenden Werkzeugprofils und des umzuformenden Werkstücks (2) variabel festgelegt werden und/oder
• **dass** die Reihenfolge der oszillierenden Relativbewegung und der unidirektionalen Relativbewegung variabel festgelegt wird.

14. Verfahren wenigstens nach Anspruch 12, **dadurch gekennzeichnet,**
• **dass** die oszillierende Relativbewegung des formgebenden Werkzeugprofils und des umzuformenden Werkstücks (2) mehrere oszillierende Teil-Relativbewegungen umfasst, wobei zwischen zwei oszillierenden Teil-Relativbewegungen eine unidirektionale Relativbewegung ausgeführt wird und
• **dass** die Variation bezüglich der oszillierenden Relativbewegung in dem laufenden Umformprozess und gegebenenfalls in dem laufenden vorhergehenden Umformprozess vorgenommen wird, indem der laufende Umformprozess und gegebenenfalls der laufende vorhergehende Umformprozess bezüglich wenigstens einer der oszillierenden Teil-Relativbewegungen variiert wird.

15. Maschinelle Anordnung zur Durchführung des Verfahrens nach Anspruch 1, mit einer Umformmaschine (1), die einen Umformantrieb (5) aufweist, der dazu ausgebildet ist, in einem Umformprozess eine Relativbewegung eines an einem Umformwerkzeug (3) der Umformmaschine (1) vorgesehenen formgebenden Werkzeugprofils und eines umzuformenden, vorzugsweise zylindrischen, Werkstücks (2) auszuführen zur Erzeugung eines werkstückseitigen Profils mit einer werkstückseitigen Profillänge (L),
• wobei für den Umformantrieb (5) eine programmierbare numerische Antriebssteuerung (12) vorgesehen ist, die ausgebildet ist zur Steuerung des Umformantriebs (5), indem in der Antriebssteuerung (12) Steuerungsparameter hinterlegbar sind, aufgrund derer in dem laufenden Umformprozess bei der Relativbewegung des formgebenden Werkzeugprofils und des umzuformenden Werkstücks (2) eine oszillierende Relativbewegung des formgebenden Werkzeugprofils und des umzuformenden Werkstücks (2) ausgeführt wird, bei welcher abwechselnd ein Umformhub und ein dem Umformhub entgegen gerichteter Rückhub ausgeführt werden,
• wobei das formgebende Werkzeugprofil bei dem Umformhub der oszillierenden Relativbewegung an dem Werkstück (2) das werkstückseitige Profil mit einer Teillänge der werkstückseitigen Profillänge (L) erzeugt und
• wobei sich das formgebende Werkzeugprofil bei dem Rückhub der oszillierenden Relativbewegung längs zumindest eines Teils der bei dem vorausgegangenen Umformhub erzeugten Teillänge der werkstückseitigen Profillänge (L) bewegt und
• wobei die Antriebssteuerung (12) zur Hinterlegung von Steuerungsparametern für den Umformprozess ausgebildet ist, aufgrund derer in dem laufenden Umformprozess eine Variation bezüglich der oszillierenden Relativbewegung des formgebenden Werkzeugprofils und des umzuformenden Werkstücks (2) vorgenommen wird,
**dadurch gekennzeichnet,**
• **dass** der Umformantrieb (5) der Umformmaschine (1) dazu ausgebildet ist, den Umformprozess zeitlich nach einem vorhergehenden Umformprozess durchzuführen und in dem vorhergehenden Umformprozess eine Relativbewegung eines an einem Umformwerkzeug (3) der Umformmaschine (1) vorgesehenen formgebenden Werkzeugprofils und eines umzuformenden, vorzugsweise zylindrischen, Werkstücks (2) auszuführen zur Erzeugung des werkstückseitigen Profils mit der werkstückseitigen Profillänge (L), wobei das Umformwerkzeug (3) des vorhergehenden Umformprozesses und das Umformwerkzeug (3) des Umformprozesses gleichartig oder identisch sind und wobei das Werkstück (2) des vorhergehenden Umformprozesses und das Werkstück (2) des Umformprozesses gleichartig oder identisch sind,
• **dass** die Antriebssteuerung (12) ausgebildet ist zur Steuerung des Umformantriebs (5), indem in der Antriebssteuerung (12) Steuerungsparameter hinterlegbar sind, aufgrund derer in dem laufenden vorhergehenden Umformprozess bei der Relativbewegung des formgebenden Werkzeugprofils und des umzuformenden Werkstücks (2) eine oszillierende Relativbewegung des formgebenden Werkzeugprofils und des umzuformenden Werkstücks (2) ausgeführt wird, bei welcher abwechselnd ein Umformhub und ein dem Umformhub entgegen gerichteter Rückhub ausgeführt werden,
- wobei das formgebende Werkzeugprofil bei dem Umformhub der oszillierenden Relativbewegung an dem Werkstück (2) das werkstückseitige Profil mit einer Teillänge der werkstückseitigen Profillänge (L) erzeugt und
- wobei sich das formgebende Werkzeugprofil bei dem Rückhub der oszillierenden Relativbewegung längs zumindest eines Teils der bei dem vorausgegangenen Umformhub erzeugten Teillänge der werkstückseitigen Profillänge (L) bewegt,
• **dass** eine Mess- und Auswertevorrichtung (16) vorgesehen ist, mittels derer nach Beendigung des vorhergehenden Umformprozesses eine Ist-Geometrie des in dem vorhergehenden Umformprozess erzeugten werkstückseitigen Profils ermittelbar und mit einer Soll-Geometrie des werkstückseitigen Profils vergleichbar ist, wobei mittels der Umformmaschine (1) im Falle einer Abweichung der Ist-Geometrie des in dem vorhergehenden Umformprozess erzeugten werkstückseitigen Profils von der Soll-Geometrie des werkstückseitigen Profils der Umformprozess durchgeführt wird, und
• **dass** die Antriebssteuerung (12) für den Fall einer Abweichung der Ist-Geometrie des in dem vorhergehenden Umformprozess erzeugten werkstückseitigen Profils von der Soll-Geometrie des werkstückseitigen Profils zur Hinterlegung von Steuerungsparametern für den Umformprozess ausgebildet ist, aufgrund derer in dem laufenden Umformprozess bezüglich der oszillierenden Relativbewegung des formgebenden Werkzeugprofils und des umzuformenden Werkstücks (2) eine Variation vorgenommen wird, aufgrund derer die Ist-Geometrie des in dem Umformprozess erzeugten werkstückseitigen Profils mit der Soll-Geometrie des werkstückseitigen Profils übereinstimmt oder sich der Soll-Geometrie des werkstückseitigen Profils zumindest annähert.

## Claims

1. A method for producing a workpiece-side profile on a plastically deformable, preferably cylindrical, workpiece (2) by axial forming,
• wherein a forming process is carried out, during which a relative movement between a shaping tool profile provided on a forming tool (3) and the workpiece (2) to be formed is carried out to produce the workpiece-side profile having a workpiece-side profile length (L),
• wherein, when the forming process is in progress,
- an oscillating relative movement between the shaping tool profile and the workpiece (2) to be formed is carried out during the relative movement between the shaping tool profile and the workpiece (2) to be formed, in which oscillating relative movement a forming stroke and a return stroke in the opposite direction to the forming stroke are alternately carried out,
- the shaping tool profile produces the workpiece-side profile on the workpiece (2) with a partial length of the workpiece-side profile length (L) during the forming stroke of the oscillating relative movement, and
- the shaping tool profile moves during the return stroke of the oscillating relative movement along at least part of the partial length of the workpiece-side profile length (L) produced during the preceding forming stroke, and
- a variation is made with regard to the oscillating relative movement between the shaping tool profile and the workpiece (2) to be formed, **characterized in that** the forming process is controlled by means of a programmable numerical controller (12) which, if an actual geometry of a workpiece-side profile produced in a forming process preceding the forming process deviates from a target geometry of the workpiece-side profile, is designed to store control parameters, on the basis of which parameters a variation is made when the forming process is in progress with regard to the oscillating relative movement between the shaping tool profile and the workpiece (2) to be formed, on the basis of which variation the actual geometry of the workpiece-side profile produced in the forming process corresponds to the target geometry of the workpiece-side profile or at least approximates the target geometry of the workpiece-side profile,
• wherein a relative movement between a shaping tool profile provided on a forming tool (3) and a workpiece (2), preferably a cylindrical workpiece, to be formed is carried out during the previous forming process in order to produce the workpiece-side profile with the workpiece-side profile length (L), wherein the forming tool (3) of the previous forming process and the forming tool (3) of the forming process are of the same kind or identical, and wherein the workpiece (2) of the previous forming process and the workpiece (2) of the forming process are of the same kind or identical,
• wherein, when the preceding forming process was in progress,
- an oscillating relative movement between the shaping tool profile and the workpiece (2) to be formed is carried out during the relative movement between the shaping tool profile and the workpiece (2) to be formed, in which oscillating relative movement a forming stroke and a return stroke in the opposite direction to the forming stroke are alternately carried out,
- the shaping tool profile produces the workpiece-side profile on the workpiece (2) with a partial length of the workpiece-side profile length (L) during the forming stroke of the oscillating relative movement, and
- the shaping tool profile moves during the return stroke of the oscillating relative movement along at least part of the partial length of the workpiece-side profile length (L) produced during the preceding forming stroke,
• wherein the preceding forming process is controlled by means of a numerical controller (12) in which control parameters for controlling the preceding forming process that was in progress with respect to the oscillating relative movement between the shaping tool profile and the workpiece (2) to be formed are stored, and
• wherein, after completion of the previous forming process, the actual geometry of the workpiece-side profile produced in the previous forming process is determined and compared with the target geometry of the workpiece-side profile.

2. The method according to claim 1, **characterized in that** the actual geometry of the workpiece-side profile produced in the preceding forming process and the actual geometry of the workpiece-side profile produced in the forming process are determined by measuring the workpiece-side profile produced in the preceding forming process and the workpiece-side profile produced in the forming process.

3. The method according to any one of the preceding claims, **characterized in that** the preceding forming process in progress is uniform with respect to the oscillating relative movement between the shaping tool profile and the workpiece (2) to be formed.

4. The method according to claim 1 or 2, **characterized in**
• **that**, during the preceding forming process in progress, a variation is made with respect to the oscillating relative movement of the shaping tool profile and the workpiece (2) to be formed, and
• **that** the variation made when the forming process is in progress with respect to the oscillating relative movement between the shaping tool profile and the workpiece (2) to be formed differs from the variation made in the preceding forming process in progress.

5. The method according to any one of the preceding claims, **characterized in**
• **that** the preceding forming process is carried out as a trial forming process in which the workpiece-side profile is produced on a test workpiece provided as the workpiece (2) to be formed, and
• **that** the forming process is carried out as a manufacturing process in which the workpiece-side profile is produced on a workpiece (2) that is of the same kind as the test workpiece of the forming process.

6. The method according to any one of the preceding claims, **characterized in that**, during the forming process and during the preceding forming process, a shaping toothing profile provided on the forming tool (3) as a shaping tool profile and the workpiece (2) to be formed are moved by means of the relative movement to produce a workpiece-side profile designed as a workpiece-side toothing profile having a workpiece-side toothing length as the workpiece-side profile length (L),
• wherein the shaping toothing profile engages in the workpiece (2) to be formed during the forming stroke of the oscillating relative movement and produces the workpiece-side toothing profile on the workpiece (2) that has a partial length of the workpiece-side toothing length, and
• wherein the shaping toothing profile moves during the return stroke of the oscillating relative movement along at least part of the partial length of the workpiece-side toothing length produced during the preceding forming stroke.

7. The method according to any one of the preceding claims, **characterized in that** the variation carried out when the forming process is in progress and, where applicable, the variation carried out during the preceding forming process in progress with respect to the oscillating relative movement between the shaping tool profile and the workpiece (2) to be formed is carried out on the basis of a process-relevant property of the workpiece to be formed.

8. The method according to claim 7, **characterized in that** the variation carried out when the forming process is in progress and, where applicable, the variation carried out during the preceding forming process in progress with respect to the oscillating relative movement between the shaping tool profile and the workpiece (2) to be formed is carried out on the basis of the rigidity of the workpiece (2) to be formed.

9. The method according to claim 7 or claim 8, **characterized in that** the variation made when the forming process is in progress and, where applicable, the variation made during the preceding forming process in progress with respect to the oscillating relative movement between the shaping tool profile and the workpiece (2) to be formed is carried out on the basis of the material of the workpiece (2) to be formed.

10. The method according to any one of the preceding claims, **characterized in that** the variation carried out when the forming process is in progress and, where applicable, the variation carried out during the preceding forming process in progress with respect to the oscillating relative movement between the shaping tool profile and the workpiece (2) to be formed is carried out on the basis of at least one forming parameter.

11. The method according to any one of the preceding claims, **characterized in that** the variation with respect to the oscillating relative movement between the shaping tool profile and the workpiece (2) to be formed is carried out when the forming process is in progress and, where applicable, during the preceding forming process in progress by varying the size of the forming stroke and/or the size of the return stroke and/or the frequency of the oscillating relative movement.

12. The method according to any one of the preceding claims, **characterized in that** the variation with respect to the oscillating relative movement of the shaping tool profile and the workpiece (2) to be formed is carried out when the forming process is in progress and, where applicable, during the preceding forming process in progress by performing the oscillating relative movement as part of the relative movement of the shaping tool profile and the workpiece (2) to be formed and by performing a unidirectional relative movement between the shaping tool profile and the workpiece (2) to be formed in addition to the oscillating relative movement as a further part of the relative movement between the shaping tool profile and the workpiece (2) to be formed, wherein the shaping tool profile produces the workpiece-side profile on the workpiece (2) with a partial length of the workpiece-side profile length (L) during the unidirectional relative movement.

13. The method according to claim 12, **characterized in**
• **that** the shares of the oscillating relative movement and the unidirectional relative movement in the relative movement between the shaping tool profile and the workpiece (2) to be formed are variably determined, and/or
• **that** the order of the oscillating relative movement and the unidirectional relative movement is variably determined.

14. The method according to at least claim 12, **characterized in**
• **that** the oscillating relative movement of the shaping tool profile and the workpiece (2) to be formed comprises a plurality of partial oscillating relative movements, wherein a unidirectional relative movement is carried out between two oscillating partial relative movements, and
• **that** the variation with respect to the oscillating relative movement is carried out when the forming process is in progress and, where applicable, during the preceding forming process in progress by varying the forming process in progress and, where applicable, the preceding forming process in progress with respect to at least one of the partial oscillating relative movements.

15. A mechanical arrangement for carrying out the method according to claim 1, having a forming machine (1) which has a forming drive (5) designed to carry out, during a forming process, a relative movement between a shaping tool profile provided on a forming tool (3) of the forming machine (1) and a workpiece (2), preferably a cylindrical workpiece, to be formed, in order to produce a workpiece-side profile having a workpiece-side profile length (L),
• wherein a programmable numerical drive controller (12) is provided for the forming drive (5), which is designed to control the forming drive (5) by control parameters being storable in the drive controller (12), on the basis of which parameters an oscillating relative movement between the shaping tool profile and the workpiece (2) to be formed is carried out when the forming process is in progress when the shaping tool profile moves relative to the workpiece (2) to be formed, in which oscillating relative movement a forming stroke and a return stroke in the opposite direction to the forming stroke are alternately carried out,
• wherein the shaping tool profile produces the workpiece-side profile on the workpiece (2) with a partial length of the workpiece-side profile length (L) during the forming stroke of the oscillating relative movement, and
• wherein the shaping tool profile moves during the return stroke of the oscillating relative movement along at least part of the partial length of the workpiece-side profile length (L) produced during the preceding forming stroke,
• wherein the drive controller (12) is designed to store control parameters for the forming process, on the basis of which parameters a variation is carried out when the forming process is in progress with regard to the oscillating relative movement between the shaping tool profile and the workpiece (2) to be formed,
**characterized in**
• **that** the forming drive (5) of the forming machine (1) is designed to carry out the forming process after a previous forming process and to perform a relative movement between a shaping tool profile provided on a forming tool (3) of the forming machine (1) and a workpiece (2), preferably a cylindrical workpiece, to be formed during the previous forming process in order to produce the workpiece-side profile having the workpiece-side profile length (L), wherein the forming tool (3) of the previous forming process and the forming tool (3) of the forming process are of the same kind or identical, and wherein the workpiece (2) of the previous forming process and the workpiece (2) of the forming process are of the same kind or identical,
• **that** the drive controller (12) is designed to control the forming drive (5) by control parameters being storable in the drive controller (12), on the basis of which parameters, when the preceding forming process is in progress, an oscillating relative movement between the shaping tool profile and the workpiece (2) to be formed is performed during the relative movement between the shaping tool profile and the workpiece (2) to be formed, in which oscillating relative movement a forming stroke and a return stroke in the opposite direction to the forming stroke are alternately carried out,
- wherein the shaping tool profile produces the workpiece-side profile on the workpiece (2) with a partial length of the workpiece-side profile length (L) during the forming stroke of the oscillating relative movement, and
- wherein the shaping tool profile moves during the return stroke of the oscillating relative movement along at least part of the partial length of the workpiece-side profile length (L) produced during the preceding forming stroke,
• **that** a measuring and evaluation device (16) is provided, by means of which, after completion of the preceding forming process, an actual geometry of the workpiece-side profile produced during the preceding forming process can be determined and compared with a target geometry of the workpiece-side profile, wherein the forming process is carried out by means of the forming machine (1) if the actual geometry of the workpiece-side profile produced during the preceding forming process deviates from the target geometry of the workpiece-side profile,
and
• **that**, if the actual geometry of the workpiece-side profile produced in the preceding forming process deviates from the target geometry of the workpiece-side profile, the drive controller (12) is designed to store control parameters for the forming process, on the basis of which control parameters a variation is made when the forming process is in progress with regard to the oscillating relative movement between the shaping tool profile and the workpiece (2) to be formed, due to which variation the actual geometry of the workpiece-side profile produced during the forming process corresponds to the target geometry of the workpiece-side profile or at least approximates the target geometry of the workpiece-side profile.

## Revendications

1. Procédé pour la génération d'un profil côté pièce sur une pièce plastiquement déformable, de préférence cylindrique, (2) par formage axial,
• dans lequel un processus de formage est réalisé, au cours duquel un mouvement relatif d'un profil d'outil formant prévu sur un outil de formage (3) et de la pièce à déformer (2) est exécuté pour la génération du profil côté pièce avec une longueur de profil côté pièce (L),
• dans lequel, dans le processus de formage en cours
- lors du mouvement relatif du profil d'outil formant et de la pièce à déformer (2), un mouvement relatif oscillant du profil d'outil formant et de la pièce à déformer (2) est exécuté, dans lequel alternativement une course de formage et une course de retour dirigée à l'encontre de la course de formage sont exécutées,
- le profil d'outil formant, lors de la course de formage du mouvement relatif oscillant, génère sur la pièce (2) le profil côté pièce avec une longueur partielle de la longueur de profil côté pièce (L) et
- le profil d'outil formant, lors de la course de retour du mouvement relatif oscillant, se déplace le long d'au moins une partie de la longueur partielle de la longueur de profil côté pièce (L) générée lors de la course de formage précédente et
- une variation concernant le mouvement relatif oscillant du profil d'outil formant et de la pièce à déformer (2) est effectuée,
**caractérisé en ce que** le processus de formage est commandé au moyen d'une commande numérique programmable (12), qui, dans le cas d'un écart d'une géométrie réelle d'un profil côté pièce généré dans un processus de formage précédant temporellement le processus de formage par rapport à une géométrie nominale du profil côté pièce, est conçue pour la mémorisation de paramètres de commande, sur la base desquels, dans le processus de formage en cours, une variation est effectuée concernant le mouvement relatif oscillant du profil d'outil formant et de la pièce à déformer (2), sur la base de laquelle la géométrie réelle du profil côté pièce généré dans le processus de formage correspond à la géométrie nominale du profil côté pièce ou s'approche au moins de la géométrie nominale du profil côté pièce,
• dans lequel, au cours du processus de formage précédent, un mouvement relatif d'un profil d'outil formant prévu sur un outil de formage (3) et d'une pièce à déformer, de préférence cylindrique, (2) est exécuté pour la génération du profil côté pièce avec la longueur de profil côté pièce (L), l'outil de formage (3) du processus de formage précédent et l'outil de formage (3) du processus de formage étant similaires ou identiques et la pièce (2) du processus de formage précédent et la pièce (2) du processus de formage étant similaires ou identiques,
• dans lequel, dans le processus de formage précédent en cours
- lors du mouvement relatif du profil d'outil formant et de la pièce à déformer (2), un mouvement relatif oscillant du profil d'outil formant et de la pièce à déformer (2) est exécuté, dans lequel alternativement une course de formage et une course de retour dirigée à l'encontre de la course de formage sont exécutées,
- le profil d'outil formant, lors de la course de formage du mouvement relatif oscillant, génère sur la pièce (2) le profil côté pièce avec une longueur partielle de la longueur de profil côté pièce (L) et
- le profil d'outil formant, lors de la course de retour du mouvement relatif oscillant, se déplace le long d'au moins une partie de la longueur partielle de la longueur de profil côté pièce (L) générée lors de la course de formage précédente,
• le processus de formage précédent étant commandé au moyen d'une commande numérique (12), dans laquelle des paramètres de commande pour la commande du processus de formage précédent en cours concernant le mouvement relatif oscillant du profil d'outil formant et de la pièce à déformer (2) sont mémorisés,
et
• après la fin du processus de formage précédent, la géométrie réelle du profil côté pièce généré dans le processus de formage précédent est déterminée et comparée à la géométrie nominale du profil côté pièce.

2. Procédé selon la revendication 1, **caractérisé en ce que** la géométrie réelle du profil côté pièce généré dans le processus de formage précédent et la géométrie réelle du profil côté pièce généré dans le processus de formage sont déterminées en mesurant le profil côté pièce généré dans le processus de formage précédent et le profil côté pièce généré dans le processus de formage.

3. Procédé selon l'une des revendications précédentes, **caractérisé en ce que** le processus de formage précédent en cours est uniforme concernant le mouvement relatif oscillant du profil d'outil formant et de la pièce à déformer (2).

4. Procédé selon la revendication 1 ou la revendication 2, **caractérisé en ce que**
• dans le processus de formage précédent en cours, une variation concernant le mouvement relatif oscillant du profil d'outil formant et de la pièce à déformer (2) est effectuée et
• la variation effectuée dans le processus de formage en cours concernant le mouvement relatif oscillant du profil d'outil formant et de la pièce à déformer (2) diffère de la variation effectuée dans le processus de formage précédent en cours.

5. Procédé selon l'une des revendications précédentes, **caractérisé en ce que**
• le processus de formage précédent est réalisé comme processus de formage à titre d'essai, dans lequel le profil côté pièce est généré sur une pièce d'essai prévue comme pièce à déformer (2) et
• le processus de formage est réalisé comme processus de fabrication, dans lequel le profil côté pièce est généré sur une pièce (2) similaire à la pièce d'essai du processus de formage.

6. Procédé selon l'une des revendications précédentes, **caractérisé en ce que**, dans le processus de formage et dans le processus de formage précédent, un profil de denture formant prévu comme profil d'outil formant sur l'outil de formage (3) et la pièce à déformer (2) sont déplacés avec le mouvement relatif pour la génération d'un profil côté pièce conçu comme profil de denture côté pièce avec une longueur de denture côté pièce comme longueur de profil côté pièce (L),
• le profil de denture formant, lors de la course de formage du mouvement relatif oscillant, engrène dans la pièce à déformer (2) et génère sur la pièce (2) le profil de denture côté pièce avec une longueur partielle de la longueur de denture côté pièce et
• le profil de denture formant, lors de la course de retour du mouvement relatif oscillant, se déplace le long d'au moins une partie de la longueur partielle de la longueur de denture côté pièce générée lors de la course de formage précédente.

7. Procédé selon l'une des revendications précédentes, **caractérisé en ce que** la variation effectuée dans le processus de formage en cours et éventuellement la variation effectuée dans le processus de formage précédent en cours concernant le mouvement relatif oscillant du profil d'outil formant et de la pièce à déformer (2) est effectuée en fonction d'une caractéristique pertinente pour le procédé de la pièce à déformer.

8. Procédé selon la revendication 7, **caractérisé en ce que** la variation effectuée dans le processus de formage en cours et éventuellement la variation effectuée dans le processus de formage précédent en cours concernant le mouvement relatif oscillant du profil d'outil formant et de la pièce à déformer (2) est effectuée en fonction de la rigidité de la pièce à déformer (2).

9. Procédé selon la revendication 7 ou la revendication 8, **caractérisé en ce que** la variation effectuée dans le processus de formage en cours et éventuellement la variation effectuée dans le processus de formage précédent en cours concernant le mouvement relatif oscillant du profil d'outil formant et de la pièce à déformer (2) est effectuée en fonction du matériau de la pièce à déformer (2).

10. Procédé selon l'une des revendications précédentes, **caractérisé en ce que** la variation effectuée dans le processus de formage en cours et éventuellement la variation effectuée dans le processus de formage précédent en cours concernant le mouvement relatif oscillant du profil d'outil formant et de la pièce à déformer (2) est effectuée en fonction d'au moins un paramètre de formage.

11. Procédé selon l'une des revendications précédentes, **caractérisé en ce que** la variation concernant le mouvement relatif oscillant du profil d'outil formant et de la pièce à déformer (2) dans le processus de formage en cours et éventuellement dans le processus de formage précédent en cours est effectuée en faisant varier la valeur de la course de formage et/ou la valeur de la course de retour et/ou la fréquence du mouvement relatif oscillant.

12. Procédé selon l'une des revendications précédentes, **caractérisé en ce que** la variation concernant le mouvement relatif oscillant du profil d'outil formant et de la pièce à déformer (2) dans le processus de formage en cours et éventuellement dans le processus de formage précédent en cours est effectuée **en ce que** le mouvement relatif oscillant est exécuté comme partie du mouvement relatif du profil d'outil formant et de la pièce à déformer (2) et **en ce qu'**en plus du mouvement relatif oscillant, comme autre partie du mouvement relatif du profil d'outil formant et de la pièce à déformer (2), un mouvement relatif unidirectionnel du profil d'outil formant et de la pièce à déformer (2) est exécuté, le profil d'outil formant générant, lors du mouvement relatif unidirectionnel sur la pièce (2), le profil côté pièce avec une longueur partielle de la longueur de profil côté pièce (L).

13. Procédé selon la revendication 12, **caractérisé en ce que**
• la part du mouvement relatif oscillant et la part du mouvement relatif unidirectionnel dans le mouvement relatif du profil d'outil formant et de la pièce à déformer (2) sont fixées de manière variable et/ou
• l'ordre du mouvement relatif oscillant et du mouvement relatif unidirectionnel est fixé de manière variable.

14. Procédé selon au moins la revendication 12, **caractérisé en ce que**
• le mouvement relatif oscillant du profil d'outil formant et de la pièce à déformer (2) comprend plusieurs sous-mouvements relatifs oscillants, un mouvement relatif unidirectionnel étant exécuté entre deux sous-mouvements relatifs oscillants et
• la variation concernant le mouvement relatif oscillant dans le processus de formage en cours et éventuellement dans le processus de formage précédent en cours est effectuée **en ce que** le processus de formage en cours et éventuellement le processus de formage précédent en cours sont variés concernant au moins l'un des sous-mouvements relatifs oscillants.

15. Agencement machine pour la réalisation du procédé selon la revendication 1, avec une machine de formage (1), qui comprend un entraînement de formage (5), lequel est conçu pour exécuter, dans un processus de formage, un mouvement relatif d'un profil d'outil formant prévu sur un outil de formage (3) de la machine de formage (1) et d'une pièce à déformer, de préférence cylindrique, (2) pour la génération d'un profil côté pièce avec une longueur de profil côté pièce (L),
• un commande d'entraînement numérique programmable (12) étant prévue pour l'entraînement de formage (5), qui est conçue pour commander l'entraînement de formage (5), en ce que des paramètres de commande peuvent être mémorisés dans la commande d'entraînement (12), sur la base desquels, dans le processus de formage en cours, lors du mouvement relatif du profil d'outil formant et de la pièce à déformer (2), un mouvement relatif oscillant du profil d'outil formant et de la pièce à déformer (2) est exécuté, dans lequel alternativement une course de formage et une course de retour dirigée à l'encontre de la course de formage sont exécutées,
• le profil d'outil formant, lors de la course de formage du mouvement relatif oscillant, génère sur la pièce (2) le profil côté pièce avec une longueur partielle de la longueur de profil côté pièce (L) et
• le profil d'outil formant, lors de la course de retour du mouvement relatif oscillant, se déplace le long d'au moins une partie de la longueur partielle de la longueur de profil côté pièce (L) générée lors de la course de formage précédente et
• la commande d'entraînement (12) étant conçue pour la mémorisation de paramètres de commande pour le processus de formage, sur la base desquels, dans le processus de formage en cours, une variation concernant le mouvement relatif oscillant du profil d'outil formant et de la pièce à déformer (2) est effectuée,
**caractérisé en ce que**
• l'entraînement de formage (5) de la machine de formage (1) est conçu pour réaliser le processus de formage temporellement après un processus de formage précédent et, dans le processus de formage précédent, exécuter un mouvement relatif d'un profil d'outil formant prévu sur un outil de formage (3) de la machine de formage (1) et d'une pièce à déformer, de préférence cylindrique, (2) pour la génération du profil côté pièce avec la longueur de profil côté pièce (L), l'outil de formage (3) du processus de formage précédent et l'outil de formage (3) du processus de formage étant similaires ou identiques et la pièce (2) du processus de formage précédent et la pièce (2) du processus de formage étant similaires ou identiques,
• la commande d'entraînement (12) étant conçue pour commander l'entraînement de formage (5), **en ce que** des paramètres de commande peuvent être mémorisés dans la commande d'entraînement (12), sur la base desquels, dans le processus de formage précédent en cours, lors du mouvement relatif du profil d'outil formant et de la pièce à déformer (2), un mouvement relatif oscillant du profil d'outil formant et de la pièce à déformer (2) est exécuté, dans lequel alternativement une course de formage et une course de retour dirigée à l'encontre de la course de formage sont exécutées,
- le profil d'outil formant, lors de la course de formage du mouvement relatif oscillant, génère sur la pièce (2) le profil côté pièce avec une longueur partielle de la longueur de profil côté pièce (L) et
- le profil d'outil formant, lors de la course de retour du mouvement relatif oscillant, se déplace le long d'au moins une partie de la longueur partielle de la longueur de profil côté pièce (L) générée lors de la course de formage précédente,
• un dispositif de mesure et d'évaluation (16) étant prévu, au moyen duquel, après la fin du processus de formage précédent, une géométrie réelle du profil côté pièce généré dans le processus de formage précédent peut être déterminée et comparée à une géométrie nominale du profil côté pièce, la machine de formage (1) permettant, en cas d'écart de la géométrie réelle du profil côté pièce généré dans le processus de formage précédent par rapport à la géométrie nominale du profil côté pièce, la réalisation du processus de formage, et
• la commande d'entraînement (12) étant conçue, en cas d'écart de la géométrie réelle du profil côté pièce généré dans le processus de formage précédent par rapport à la géométrie nominale du profil côté pièce, pour la mémorisation de paramètres de commande pour le processus de formage, sur la base desquels, dans le processus de formage en cours, une variation concernant le mouvement relatif oscillant du profil d'outil formant et de la pièce à déformer (2) est effectuée, sur la base de laquelle la géométrie réelle du profil côté pièce généré dans le processus de formage correspond à la géométrie nominale du profil côté pièce ou s'approche au moins de la géométrie nominale du profil côté pièce.
